Europäisches Patentamt

European Patent Office

Office européen des brevets

(19)

(11) Numéro de publication : **0 612 964 A1**

## (12) DEMANDE DE BREVET EUROPEEN

(21) Numéro de dépôt : 94400365.6

(22) Date de dépôt : 21.02.94

(51) Int. Cl.⁵ : **F24F 11/00, B61D 27/00, B60H 1/00**

(30) Priorité : **24.02.93 FR 9302111**
**09.09.93 FR 9310730**

(43) Date de publication de la demande :
**31.08.94 Bulletin 94/35**

(84) Etats contractants désignés :
**BE DE ES FR GB IT SE**

(71) Demandeur : **GEC ALSTHOM TRANSPORT SA**
**38, Avenue Kleber**
**F-75016 Paris (FR)**

(72) Inventeur : **Friot, Laurent**
**11, Allee Marigny,**
**Appt. 117**
**F-86000 Poitiers (FR)**
Inventeur : **Trigeassou, Jean-Claude**
**81 Rue du Chemin Vert**
**F-86550 Mignaloux-Beauvoir (FR)**

(74) Mandataire : **Fournier, Michel et al**
**SOSPI**
**14-16, rue de la Baume**
**F-75008 Paris (FR)**

(54) **Dispositif de régulation de climatisation.**

(57)   L'invention concerne un dispositif de régulation de climatisation d'un local fixe ou en mouvement, le local étant climatisé grâce à une unité de conditionnement commandée par un correcteur recevant sur ses entrées une grandeur de consigne de température ($T_c$) et une grandeur représentative de la température du local, caractérisé en ce que le dispositif comprend un organe de simulation non-linéaire et non-stationnaire de l'ensemble constitué par l'unité de conditionnement et par le local et en ce que le correcteur comprend des moyens de gestion (26-28) de la saturation de manière à prendre en compte une limitation de l'amplitude du signal de commande du processus (12) et du modèle (13) du processus.

FIG.6

EP 0 612 964 A1

La présente invention concerne un dispositif de régulation de climatisation d'un local fixe ou en mouvement, le local étant climatisé grâce à une unité de conditionnement.

La régulation de climatisation doit permettre d'assurer, à l'intérieur d'un local, une température asservie à une température de consigne. La régulation doit également assurer la rapidité des phases de mise en régime de la climatisation. Ainsi, la régulation de climatisation des voitures ferroviaires doit permettre une mise en service rapide puis assurer une température constante pour le confort des passagers.

La régulation de climatisation est souvent réalisée par des systèmes à action Proportionnelle-Intégrale-Dérivée (PID) qui, notamment dans le domaine ferroviaire, ne donnent pas entière satisfaction. En effet, en cas d'une grande différence entre la température de consigne et la température extérieure, la régulation de type PID provoque une délai trop long dans la mise en régime et une dépense trop importante d'énergie. On obtient généralement soit un dépassement trop important de la valeur de consigne à la mise en service, ce qui entraîne une perte d'énergie inutile et un temps de stabilisation de la température trop long, soit une absence de dépassement mais un temps d'atteinte de la valeur de consigne beaucoup trop long.

Pratiquement, on effectue manuellement les réglages des coefficients du système PID avant l'installation dans les véhicules, en espérant avoir le meilleur compromis entre le phénomène de saturation de l'action Intégrale et la difficulté de réglage de l'action Dérivée.

La régulation de climatisation basée sur un système du type PID ne remplit pas les fonctions de mise en régime rapide sans dépassement malgré le recours à de nombreux artifices de conception (désaturation de l'action Intégrale, changement des coefficients du régulateur en cours de fonctionnement) qui conduisent à une structure lourde et difficile à mettre au point. Ce problème se pose de manière particulièrement sensible pour les locaux où le fonctionnement moyen de l'ensemble de climatisation est lié à la non-linéarité du système (différence de dynamique importante entre les phases de montée et de descente en température). Cette non-linéarité ne peut être prise en compte par le régulateur PID.

La présente invention permet de remédier à ces inconvénients en mettant en oeuvre une régulation permettant une meilleure prise en compte du fonctionnement du système. Il s'agit d'une régulation du type à commande par modèle interne permettant de faire intervenir directement la connaissance du processus à commander. Ce système permet d'une part de simuler à l'aide d'un calculateur le fonctionnement du système de climatisation et, d'autre part, de mettre au point une structure de régulateur et d'en calculer les paramètres.

L'invention a donc pour objet un dispositif de régulation de climatisation d'un local fixe ou en mouvement, le local étant climatisé grâce à une unité de conditionnement commandée par un correcteur recevant sur ses entrées une grandeur de consigne de température et une grandeur représentative de la température du local, caractérisé en ce que le dispositif comprend un organe de simulation non-linéaire et non-stationnaire de l'ensemble constitué par l'unité de conditionnement et par le local.

L'organe de simulation comprend avantageusement des moyens d'adaptation automatique aux phases de montée et de descente en température du local.

L'organe de simulation présentant des paramètres de gain statique G et de constante de temps $\tau$, son adaptation automatique est obtenue par l'association desdits paramètres qui varient de façon inversement proportionnelle à l'écart $\Delta$ entre l'excitation e de l'organe de simulation et sa réponse s pour satisfaire l'équation différentielle:

$$G.e = s + \tau \frac{ds}{dt}$$

dans laquelle :

$$G = \frac{1}{a + b\Delta}$$

$$\tau = \frac{1}{c + d\Delta}$$

$$\Delta = \mid s - e \mid$$

a, b, c et d étant des coefficients déterminés lors de l'identification du système.

L'organe de simulation peut comporter un modèle de l'unité de conditionnement et un modèle du local.

L'unité de conditionnement aspire de l'air neuf qui est conditionné et soufflé au local lequel possède une sortie d'extraction d'air vers l'extérieur et une sortie d'air repris par l'unité de conditionnement:

- le correcteur, recevant également une grandeur représentative de la température de l'air neuf, délivre en parallèle des signaux de commande à l'unité de conditionnement ainsi qu'à son modèle,
- le modèle de l'unité de conditionnement délivre un signal de température d'air soufflé estimée,
- le modèle du local délivre un signal de température d'air repris estimée à partir de la température d'air soufflé mesurée,
- un premier comparateur reçoit sur l'une de ses deux entrées ledit signal de température d'air repris estimée et sur sa deuxième entrée un signal représentatif de la température d'air repris dans le local, ce premier comparateur délivrant un signal de sortie constituant la différence des signaux reçus sur ses entrées,
- le modèle de l'unité de conditionnement reçoit également ledit signal représentatif de la température d'air repris.

Un deuxième comparateur peut recevoir sur une première entrée le signal de température d'air soufflé estimée et sur une deuxième entrée un signal représentatif de la température d'air soufflé dans le local et délivre au correcteur un signal représentatif de la différence de ses signaux d'entrée.

Le correcteur peut comprendre un troisième comparateur recevant sur ses entrées la grandeur de consigne de température et la grandeur représentative de la différence entre la température du local et celle estimée et délivrant un signal de sortie à un premier organe de calcul qui délivre un signal de sortie à l'une des entrées d'un comparateur, le comparateur recevant sur sa deuxième entrée le signal délivré par le deuxième comparateur et délivrant un signal à un deuxième organe de calcul qui délivre lesdits signaux de commande.

Un autre but de la présente invention est de garantir un niveau de performance prédéterminé même dans des cas de désadaptation entre le système réel à climatiser et le système expérimental ayant servi à la mise au point du dispositif de régulation de climatisation.

L'invention a donc également pour objet un dispositif de régulation de climatisation caractérisé en ce qu'il comprend des moyens de gestion de la saturation de manière à prendre en compte une limitation de l'amplitude du signal de commande du processus et du modèle du processus.

L'invention sera mieux comprise et d'autres avantages et particularités apparaîtront à la lecture de la description qui va suivre, donnée à titre non limitatif, accompagnée des dessins annexés parmi lesquels:

- la figure 1 représente la structure d'un système de climatisation ferroviaire selon l'art connu,
- la figure 2 représente la structure simplifiée d'un système de climatisation ferroviaire selon l'invention,
- la figure 3 est un schéma général de la structure du système de climatisation ferroviaire selon l'invention,
- les figures 4 et 5 représentent des schémas de détail de la structure représentée à la figure 3, et
- la figure 6 représente la structure simplifiée d'un système de climatisation ferroviaire selon l'invention dans lequel apparaît une branche dédiée à la gestion de la saturation.

La description portera à titre d'exemple sur une régulation de climatisation de véhicule ferroviaire. Cependant l'invention peut s'appliquer sans problème particulier pour un homme du métier à tout autre type de local, fixe ou en mouvement.

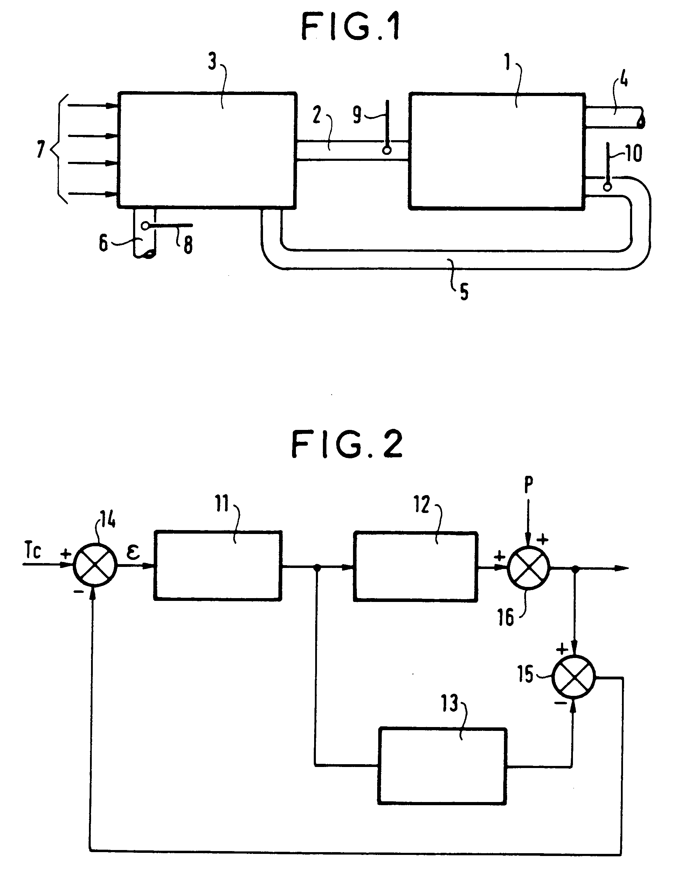

La structure classique d'un système de climatisation ferroviaire est schématisée à la figure 1. La salle voyageurs 1 du véhicule ferroviaire reçoit, par un conduit 2, de l'air soufflé par l'unité de conditionnement 3. Elle possède un conduit 4 permettant l'extraction de l'air vicié vers l'extérieur et un conduit 5 reliant la salle voyageurs à l'unité de conditionnement. Ce conduit 5 permet la reprise d'une partie de l'air, qui sans cela serait extrait de la salle voyageurs vers l'extérieur, pour le mélanger à de l'air neuf entrant dans l'unité de conditionnement 3 par le conduit 6.

L'unité de conditionnement 3 comprend une batterie de résistances chauffantes, un groupe de climatisation pour le refroidissement de l'air (compresseur, condenseur, évaporateur), un caisson de mélange entre l'air neuf et l'air repris, et un moto-ventilateur de soufflage d'air. L'unité de conditionnement reçoit, par l'intermédiaire de connexions électriques 7, des signaux de commande des résistances pour le chauffage, du compresseur pour le refroidissement, de la vitesse de ventilation et de la position des volets de mélange d'air neuf et d'air repris.

Des capteurs de température 8, 9 et 10 délivrent des signaux représentatifs respectivement des températures d'air neuf, d'air soufflé et d'air repris. De manière connue, ces signaux sont adressés à un correcteur, par exemple du type PID, qui fournit les signaux de commande en fonction d'une température de consigne imposée.

La figure 2 représente de façon sommaire la structure du système de climatisation ferroviaire selon l'invention. Il s'agit d'une régulation du type à commande par modèle interne. Le système comprend un correcteur 11 délivrant des signaux de commande simultanément au processus réel à commander 12 et à un modèle 13 du processus. La température de consigne $T_c$ est adressée, sous forme d'un signal électrique, à l'une des entrées du comparateur 14 dont la deuxième entrée reçoit un signal en provenance du comparateur 15. Le comparateur 14 délivre un signal de sortie ε au correcteur 11.

Le comparateur 15 reçoit sur une première entrée le signal sortant du processus 12 (représentant la température à l'intérieur du véhicule) et sur une deuxième entrée le signal sortant du modèle 13 et délivre en réponse un signal de sortie adressé au comparateur 14.

Le comparateur 16 permet d'introduire de manière symbolique l'influence des perturbations P dues à l'environnement extérieur ainsi qu'aux passagers du véhicule.

Ce type de régulation permet de faire intervenir directement la connaissance du processus à commander, c'est-à-dire le modèle du système.

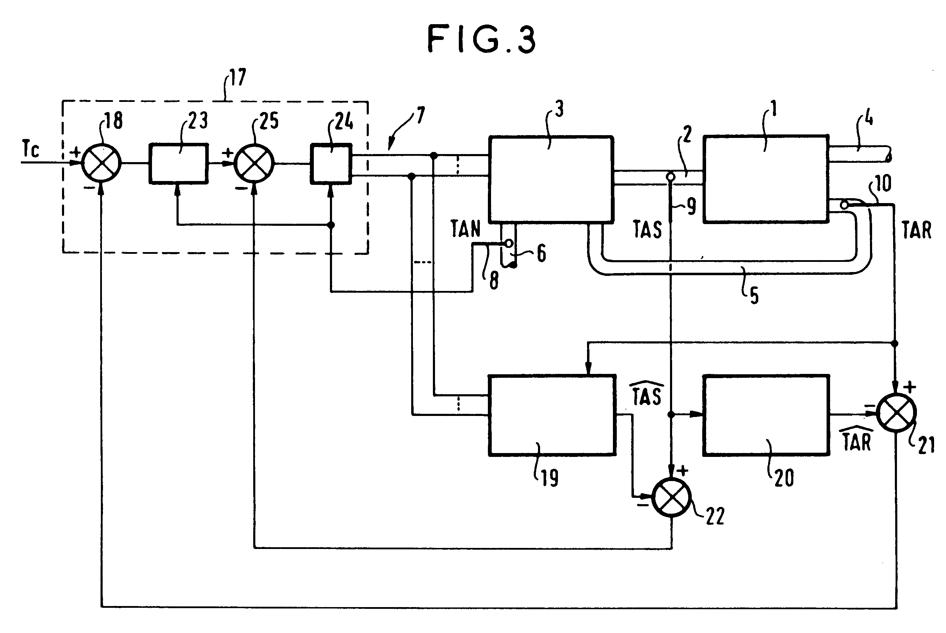

Le système de régulation de climatisation selon l'invention est représenté en détail à la figure 3. Les éléments identiques à ceux de la figure 1 sont référencés pareillement. Le système comprend en outre un correcteur 17 auquel on a incorporé le comparateur 18 qui reçoit sur une première entrée la température de consigne $T_c$.

Le système comprend encore un modèle 19 de l'unité de conditionnement recevant sur ses entrées les mêmes signaux de commande que l'unité de conditionnement 3. Le modèle 19 délivre un signal représentatif de la température d'air soufflé estimée $\widehat{TAS}$. Le modèle 20 délivre, en réponse à la grandeur représentative de la température d'air soufflé, un signal représentatif de la température d'air $\widehat{TAR}$. Ce signal est adressé à l'une des entrées du comparateur 21 qui reçoit sur sa deuxième entrée un signal représentatif de la température d'air repris TAR. Le signal représentant la température $\widehat{TAR}$ est également adressé au modèle 19 pour réaliser la fonction "air repris" du processus réel.

Le comparateur 21 délivre un signal de sortie qui est adressé à une deuxième entrée du comparateur 18 lequel fournit un signal d'erreur au reste du correcteur 17. Le correcteur reçoit également un signal issu du capteur de température 8.

Une variante du système consiste à disposer d'une structure cascade grâce à un comparateur 22 revecant sur l'une de ses entrées le signal $\widehat{TAS}$ et sur une autre entrée un signal représentant la température d'air soufflé dans la salle voyageurs TAS et fourni par le capteur de température 9. Le comparateur 22 délivre un signal d'erreur qui est adressé au correcteur 17. Dans ce cas, le correcteur 17 comprend deux organes de calcul 23 et 24 séparés par un comparateur 25. L'organe de calcul 23 reçoit le signal d'erreur délivré par le comparateur 18 et un signal représentatif de la température d'air neuf TAN fourni par le capteur 8. Il délivre un signal sur une première entrée du comparateur 25 qui reçoit sur sa deuxième entrée le signal d'erreur fourni par le comparateur 22. Le comparateur délivre un signal à l'organe de calcul 24 qui reçoit également, sur une autre entrée, le signal issu du capteur 8. L'organe de calcul 24 délivre en réponse les signaux de commande 7.

Le correcteur peut être d'un type connu de l'homme de métier. Il peut s'agir d'un correcteur figé, d'un correcteur variable dans le temps (ses paramètres évoluant en liaison avec ceux des modèles) ou d'un correcteur à algorithme de commande prédictive.

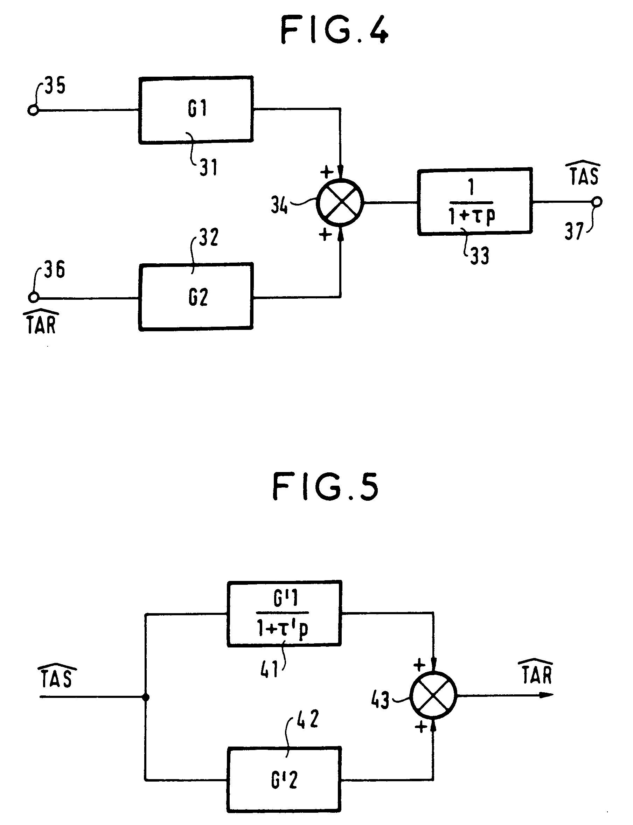

La figure 4 illustre une configuration possible pour le modèle de l'unité de conditionnement, par exemple pour la partie commande du chauffage les autres parties étant identiques. Cette partie du modèle comprend trois éléments de fonction de transfert 31, 32 et 33. L'élément 31 reçoit sur son entrée 35 un signal correspondant à la commande de chauffage. Il a pour fonction de transfert G1. Sa sortie est reliée à l'une des entrées de sommateur 34. L'élément 32, de fonction de transfert G2, reçoit sur son entrée 36 le signal $\widehat{TAR}$ (voir figure 3). Sa sortie est reliée à la seconde entrée du sommateur 34 dont la sortie est reliée à l'entrée de l'élément 33. L'élément 33 a pour fonction de transfert $\dfrac{1}{1 + \tau\, p}$, p étant l'opérateur de dérivation temporelle. Il délivre sur sa sortie 37 le signal $\widehat{TAS}$ correspondant à la grandeur représentative de la température d'air soufflé de l'unité de conditionnement.

L'expérimentation a conduit à définir G1 de la manière suivante G1 = $\dfrac{1}{a + b\Delta + c\Delta^2}$ avec $\Delta$ = $|\ \widehat{TAS}\ -\ \widehat{TAR}\ |$.

Les paramètres a, b et c sont des valeurs expérimentales obtenues par identification ainsi que G2 et $\tau$. On fait intervenir dans ce modèle les entrées de l'unité de conditionnement (commande, température d'air repris) dont l'influence est modulée par les coefficients G1 et G2 et par la constante de temps $\tau$ du système. La non-linéarité du système thermique apparaît donc à travers le coefficient G1 qui varie au cours du temps.

En fait le système comporte une troisième entrée constituée par la température d'air neuf. Cet élément, non pris en compte dans le schéma de la figure 4, intervient comme un simple décalage des températures, car, si la commande du système est nulle, la température d'air soufflé doit être au moins égale à la température d'air neuf. Son action est donc simple à mettre en oeuvre et ne présente pas à priori de difficulté particulière.

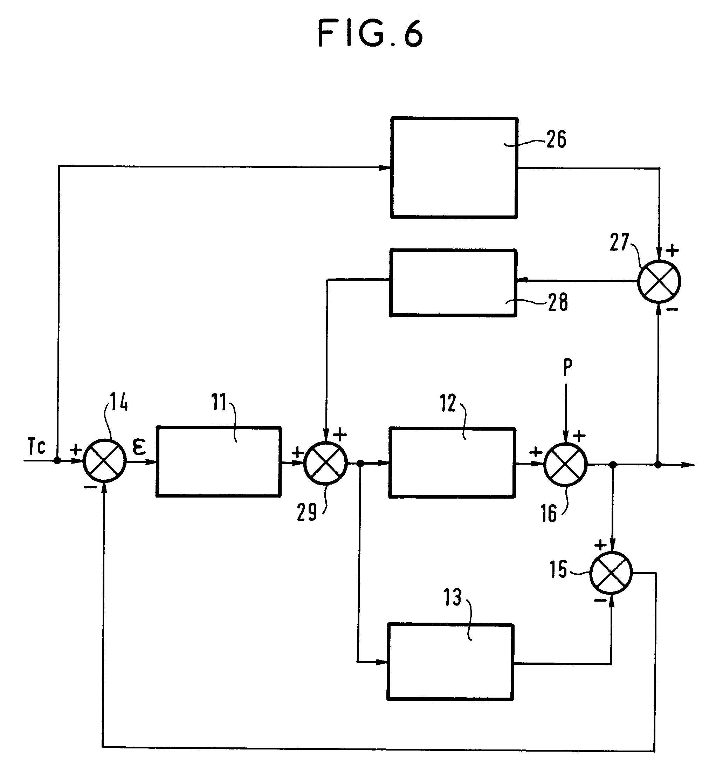

La figure 5 illustre une configuration possible pour le modèle de la salle voyageurs. Le modèle comprend deux éléments de fonction de transfert 41 et 42. Les entrées des éléments 41 et 42 sont adressées par le même signal $\widehat{TAS}$. Leurs sorties sont reliées aux entrées d'un sommateur 43 qui délivre le signal $\widehat{TAR}$.

L'élément 41 a pour fonction de transfert $\dfrac{G'1}{1 + \tau'p}$ et l'élément 42 a pour fonction de transfert G'2 = $\dfrac{1}{x + y\Delta}$, avec $\tau'$ = $\dfrac{1}{z + w\Delta}$ et $\Delta$ = $|\ \widehat{TAR}\ -\ \widehat{TAS}\ |$, p étant l'opérateur de dérivation temporelle.

Les paramètres x, y, z, w et G'1 sont issus de l'identification du système. Le modèle de la salle voyageurs fait apparaître deux branches en parallèle. La première (coefficient G'2) fait intervenir l'action directe et rapide de l'air soufflé sur l'air repris. La deuxième permet d'introduire le temps de réponse $\tau'$ de l'ensemble des matériaux composant la salle voyageurs à une sollicitation d'air soufflé.

Le modèle non-linéaire qu'utilise l'invention permet de prendre en compte la différence importante de dynamique entre les montées et les descentes en température ainsi qu'un écart entre l'état de départ (mise en route de la climatisation) et l'état final (obtention de la température de consigne).

Un perfectionnement important du dispositif de régulation de climatisation de l'invention porte sur une gestion spécifique de la saturation du système de commande de la régulation.

Une telle saturation est par exemple engendrée par la limite physique de la plage de fonctionnement des actionneurs mais également par la puissance disponible.

Dans le cas où la commande de la régulation est saturée le dispositif de régulation de climatisation tel que décrit précédemment permet de s'affranchir d'un dépassement de la consigne mais à comme inconvénient de ne pouvoir réagir qu'avec la dynamique propre du processus, du fait de la structure en boucle ouverte de ce type de correcteur.

La figure 6 représente la structure simplifiée d'un système de climatisation ferroviaire selon l'invention dans lequel apparaît une branche dédiée à la gestion de la saturation.

La figure 6 reprend les éléments représenté à la figure 2, à savoir: un correcteur 11 délivrant des signaux de commande simultanément au processus réel à commander 12 et à un modèle 13 du processus. La température de consigne Tc est adressée à l'une des entrées du comparateur 14 dont la deuxième entrée reçoit un signal en provenance du comparateur 15. Le comparateur 14 délivre un signal de sortie au correcteur 11.

Le comparateur 15 reçoit sur une première entrée le signal sortant du processus 12 (représentant la température à l'intérieur du véhicule) et sur une deuxième entrée le signal sortant du modèle 13 et délivre en réponse un signal de sortie adressé au comparateur 14.

Le comparateur 16 permet d'introduire de manière symbolique l'influence des perturbations P dues à l'environnement extérieur ainsi qu'aux passagers du véhicule.

Conformément au perfectionnement du dispositif de régulation de l'invention, un élément 26, de fonction de transfert, par exemple, du type $\dfrac{G}{1 + \tau\,p}$, recevant sur son entrée la température de consigne, permet de délivrer un signal représentatif de la trajectoire de référence que doit rallier la sortie du processus 12.

Le calcul de l'écart entre cette trajectoire de référence et la sortie du processus 12 au moyen d'un comparateur 27 permet, par l'intermédiaire d'un second correcteur 28, de produire une correction de la commande conventionnelle issu du correcteur 11 au moyen d'un comparateur 29.

Dans le domaine de la commande par modèle interne, le modèle du processus doit reproduire au mieux le processus lui-même, en particulier ses non-linéarités. Lorsque le modèle du processus et le processus sont parfaitement identiques, le signal de sortie du comparateur 15 est constamment nul. Le fonctionnement se fait donc en boucle ouverte. Si une saturation limite l'amplitude du signal de commande du processus 12 et du modèle 13 du processus les objectifs dynamiques ne sont plus satisfaits. De plus la boucle fermée est incapable de corriger ce défaut.

En fonctionnement petit signaux, c'est à dire en régulation autour d'un point de fonctionnement, cette anomalie ne se manifeste pas.

Par contre, lors d'une variation importante du point de consigne, par exemple à la mise en marche du dispositif de climatisation, le dispositif présente une réponse beaucoup plus lente que celle correspondant à la trajectoire de référence.

En comparant cette trajectoire de référence à la sortie réelle du processus, le second correcteur 28 élabore un signal qui combiné à celui du correcteur conventionnel 11, au moyen du comparateur 29, permet de combattre la perturbation introduite par la non-linéarité de l'actionneur.

Par ailleurs en fonctionnement petit signaux, ce correcteur permet aussi de combattre des perturbations d'état ou de structure, en cas de désadaptation système/modèle.

## Revendications

**1/** Dispositif de régulation de climatisation d'un local fixe ou en mouvement (1), le local étant climatisé grâce à une unité de conditionnement (3) commandée par un correcteur (17) recevant sur ses entrées une grandeur de consigne de température ($T_c$) et une grandeur représentative de la température du local, caractérisé en ce que le dispositif comprend un organe de simulation non-linéaire et non-stationnaire de l'ensemble constitué par l'unité de conditionnement et par le local.

**2/** Dispositif selon la revendication 1, caractérisé en ce que le correcteur comprend des moyens de gestion (26-28) de la saturation de manière à prendre en compte une limitation de l'amplitude du signal de commande du processus (12) et du modèle (13) du processus.

**3/** Dispositif selon la revendication 1 ou 2, caractérisé en ce que l'organe de simulation comprend des moyens d'adaptation automatique aux phases de montée et de descente en température du local.

**4/** Dispositif selon la revendication 3, caractérisé en ce que l'organe de simulation présentant des paramètres de gain statique G et de constante de temps $\tau$, son adaptation automatique est obtenue par l'association desdits paramètres qui varient de façon inversement proportionnelle à l'écart $\Delta$ entre l'excitation e de l'organe de simulation et sa réponse s pour satisfaire l'équation différentielle:

$$G.e = s + \tau \frac{ds}{dt}$$

dans laquelle :

$$G = \frac{1}{a + b\Delta}$$

$$\tau = \frac{1}{c + d\Delta}$$

$$\Delta = |\, s - e \,|$$

a, b, c et d étant des coefficients déterminés lors de l'identification du système.

**5/** Dispositif selon l'une quelconque des revendications 1 à 4, caractérisé en ce que l'organe de simulation comporte un modèle de l'unité de conditionnement (19) et un modèle de local (20).

**6/** Dispositif selon la revendication 5, caractérisé en ce que, l'unité de conditionnement (3) aspire de l'air neuf qui est conditionné et soufflé au local (1) lequel possède une sortie d'extraction d'air vers l'extérieur et une sortie d'air repris par ladite unité de conditionnement:

- le correcteur (17), recevant également une grandeur représentative de la température de l'air neuf, délivre en parallèle des signaux de commande (7) à l'unité de conditionnement (3) ainsi qu'à son modèle (19),
- le modèle de l'unité de conditionnement (19) un signal de température d'air soufflé estimée ( $\widehat{TAS}$ ),
- le modèle du local (20) qui délivre un signal de température d'air repris estimée ( $\widehat{TAR}$ ) à partir du signal de température d'air soufflé,
- un premier comparateur (21) reçoit sur l'une de ses deux entrées ledit signal de température d'air repris estimée ( $\widehat{TAR}$ ) et sur sa deuxième entrée un signal représentatif de la température d'air repris (TAR) dans le local, ce premier comparateur (21) délivrant un signal de sortie constituant la différence des signaux reçus sur ses entrées,
- le modèle de l'unité de conditionnement (19) reçoit également ledit signal de température d'air repris.

**7/** Dispositif selon la revendication 6, caractérisé en ce qu'un deuxième comparateur (22) reçoit sur une première entrée le signal de température d'air soufflé estimée et sur une deuxième entrée un signal représentatif de la température d'air soufflé dans le local (1) et délivre au correcteur (17) un signal représentatif de la différence de ses signaux d'entrée.

**8/** Dispositif selon la revendication 7, caractérisé en ce que le correcteur (17) comprend un troisième comparateur (18) recevant sur ses entrées la grandeur de consigne de température ($T_c$) et la grandeur représentative de la différence entre la température du local et celle estimée et délivrant un signal de sortie à un premier organe de calcul (23) qui délivre un signal de sortie à l'une des entrées d'un comparateur (25), le comparateur recevant sur sa deuxième entrée le signal délivré par le deuxième comparateur (22) et délivrant un signal à un deuxième organe de calcul (24) qui délivre lesdits signaux de commande (7).

**9/** Dispositif selon l'une quelconque des revendications précédentes, caractérisé en ce que ledit local (1) est un véhicule ferroviaire.

# FIG.1

# FIG.2

# FIG.3

EP 0 612 964 A1

# FIG.4

```
35 ○───────┤   G1   ├──────┐
            └────────┘      │
                31          │  +
                           ⊗──────┤  1   ├─── ○  TAS
                        34        │ ─────│     37
                           ⊗      │ 1+τp │
                            +     └──────┘
                                     33
         32                 │
36 ○───────┤   G2   ├──────┘
            └────────┘
  TAR
```

# FIG.5

```
                    ┌──────────┐
              ┌─────┤   G'1    ├─────┐
              │     │ ──────── │     │
              │     │  1+τ'p   │     │  +
              │     └──────────┘     ⊗──────→  TAR
  TAS ────────┤          41          ⊗
              │                   43  +
              │     ┌──────────┐     │
              │     │    42    │     │
              └─────┤   G'2    ├─────┘
                    └──────────┘
```

# FIG.6

**Office européen des brevets**

## RAPPORT DE RECHERCHE EUROPEENNE

Numero de la demande

EP 94 40 0365

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| A | US-A-4 897 798 (CLER)<br>* abrégé; figure 2 *<br>--- | 1 | F24F11/00<br>B61D27/00<br>B60H1/00 |
| A | US-A-4 784 212 (BRIMER ET AL.)<br>* abrégé; figure 10 *<br>----- | 1 | |

**DOMAINES TECHNIQUES RECHERCHES (Int.Cl.5)**

F24F
B61D
B60H

Le présent rapport a été établi pour toutes les revendications

| Lieu de la recherche | Date d'achèvement de la recherche | Examinateur |
|---|---|---|
| LA HAYE | 10 Juin 1994 | Peschel, G |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................
& : membre de la même famille, document correspondant

EPO FORM 1503 03.82 (P04C02)

11